# EUROPEAN PATENT SPECIFICATION

(11) **EP 3 911 805 B1**
(45) Date of publication and mention of the grant of the patent: **15.05.2024**
(21) Application number: 20700713.9
(22) Date of filing: 15.01.2020
(51) Int. Cl.: E04B 2/86, B32B 5/02, B32B 13/02, B32B 13/14, E04C 3/20, E04C 3/28, E04C 3/29, B32B 7/12

(54) **A CONSTRUCTION SYSTEM AND METHOD**
KONSTRUKTIONSSYSTEM UND -VERFAHREN
SYSTÈME ET PROCÉDÉ DE CONSTRUCTION

(30) Priority: 17.01.2019 EP 19152290
(43) Date of publication of application: 24.11.2021
(73) Proprietor: McCARTHY, Kerry, Listowel, County Kerry, V31 XN83 (IE); McCARTHY, John, Listowel, County Kerry, V31 A433 (IE)
(72) Inventor: McCARTHY, Kerry, Listowel, County Kerry, V31 XN83 (IE); McCARTHY, John, Listowel, County Kerry, V31 A433 (IE)
(74) Representative: Weldon O'Brien Ltd.
(86) International application number: PCT/EP2020/050864
(87) International publication number: WO 2020/148312

(56) References cited:
- WO-A1-97/32095
- AU-B4- 2012 100 923
- CN-A- 108 749 193
- FR-A1- 2 631 882
- US-A1- 2009 235 601
- US-A1- 2011 300 386
- US-A1- 2012 137 613

## Description

### Introduction

The invention relates to construction systems and methods, especially for small to medium sized buildings such as two-storey residences.

At present many houses are built using the conventional method of transporting materials to site and the walls being built by block-laying skilled labour, typically with good insulation being inserted into a cavity between wall leaves and potentially good layers of insulation on the inside and/or outside as cladding. With good planning such a construction method can provide buildings of good quality and reasonable energy efficiency. However, it is very labour intensive and lead time to completion is long.

Recent developments in construction techniques have included off-site manufacturing of pods which can be dropped by crane into a structure which has been erected on site. These pods are typically of individual rooms such as kitchens or bathrooms. However, such techniques are not cost-effective or practical for moderate-sized schemes of houses.

RU162624, EP3369871, CN205314311, and DE4030407 describe wall arrangements with parallel cavities.

WO97/32095A1 describes an insulated wall panel with compartments for receiving concrete.

US2012/137613A1 describes an insulated concrete wall with a plurality of spacers.

AU2012100923A4 describes a wall constructions system with openings for concrete. US2009/235601A1 describes a wall unit having wall ties and rods and openings. FR2631882A1 describes method for manufacturing structural elements made from bonded plywood. CN108749193 describes a high-strength multi-performance laminated and reinforced plate and a process. US2011/300386 describes a building construction sheathing panel which employs a two-component system.

The invention is directed towards providing improved systems and methods for construction of houses or the like buildings in a manner which is more cost-effective, less labour-intensive, and which achieves better insulation properties.

### Summary

We describe a wall section for construction of a building, as set out in claim 1.

Preferably, at least some of the spacers are of extruded plastics material.

Preferably, the wall section comprises a plurality of vertical spacers and a plurality of horizontal spacers in which at least some of the horizonal spacers form a top edge of the wall section. Preferably, the wall section further comprises a fourth board defining a third space with the third board, said third space having an in-fill material.

Preferably, at least one of the first and third spaces is filled with a cured insulating material. Optionally, the cured material includes polyurethane.

Preferably, at least some of the boards are of concrete fibreboard.

We also describe a wall assembly comprising a wall section of any example described herein, and a corner component having panels arranged to form continuations of said wall section boards. Preferably, the corner component comprises vertically-arranged spacers.

Preferably, at least some of the wall sections are fixed to the floor foundation by a floor-mounted track.

Preferably, the assembly further comprises a ring beam formed by reinforcing bar extending through apertures of said spacers in the cavity.

We also describe an elongate structural member, not according to the invention, comprising a plurality of panels joined together in a sandwich by an adhesive and with a mesh embedded in the adhesive between at least two of the panels. Preferably, the mesh comprises a non-metallic material. Preferably, the mesh comprises basalt. Preferably, the spacing between juxtaposed panels is substantially equal to the depth of the mesh. In one example the structural member is a joist, and in another example the structural member is a rafter.

We also describe a method of erecting a building comprising the steps of manufacturing a plurality of wall sections of any example, mounting the wall sections on a foundation, joining at least some of said sections, pouring concrete into at least some of the cavities, and mounting ceiling and/or floor joists to the wall sections.

Preferably, the joists are mounted to the wall sections while being supported by a temporary support, the concrete is poured, and the temporary support is removed after the concrete has cured. Preferably, the joists include structural members as described, with a plurality of panels joined together in a sandwich by an adhesive and with a mesh embedded in the adhesive between at least two of the panels.

### Detailed Description of the Invention

The invention will be more clearly understood from the following description of some embodiments thereof, given by way of example only with reference to the accompanying drawings in which:
Fig. 1 is a front view of a house wall manufactured off-site initially and completed on-site according to the methods described below;
Fig. 2 is a cross-sectional view through part of the wall, and Fig. 3 is a plan view;
Figs. 4(a) and (b) are side and plan views of a spacer of the wall;
Fig. 5 is a cross-sectional view of a wall after mounting of a joist, the joist being supported by the wall inner layers, and Fig. 6 is a cross-sectional view of the top of a wall after mounting of a rafter to the joist;
Fig. 7 is a plan view of a corner between two orthogonal walls;
Fig. 8 is a diagram illustrating erection of a lintel over a window;
Fig. 9 is an exploded view of a joist manufactured from layers of material adhered together with a basalt mesh at the interfacing surfaces; and
Fig. 10 is a cross-sectional view of an alternative wall section.

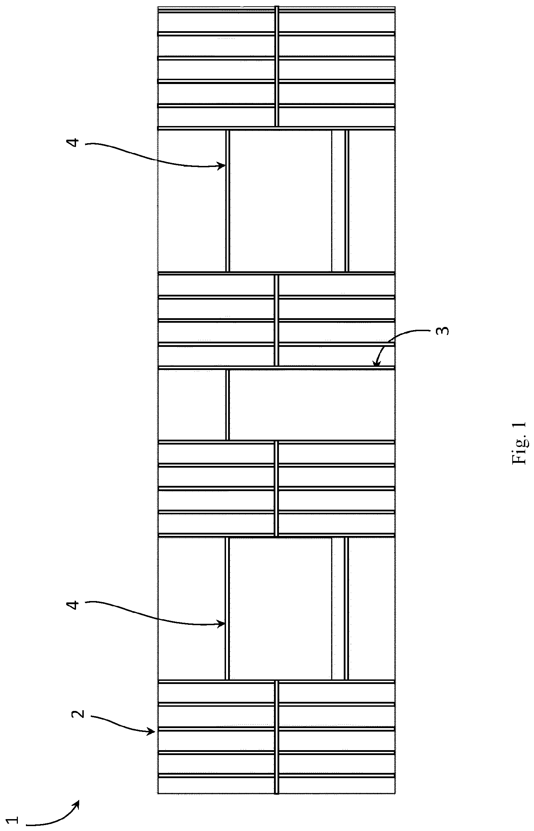

Referring to Fig. 1 a wall 2 has a door ope 3 and two window opes 4 and is of conventional appearance.

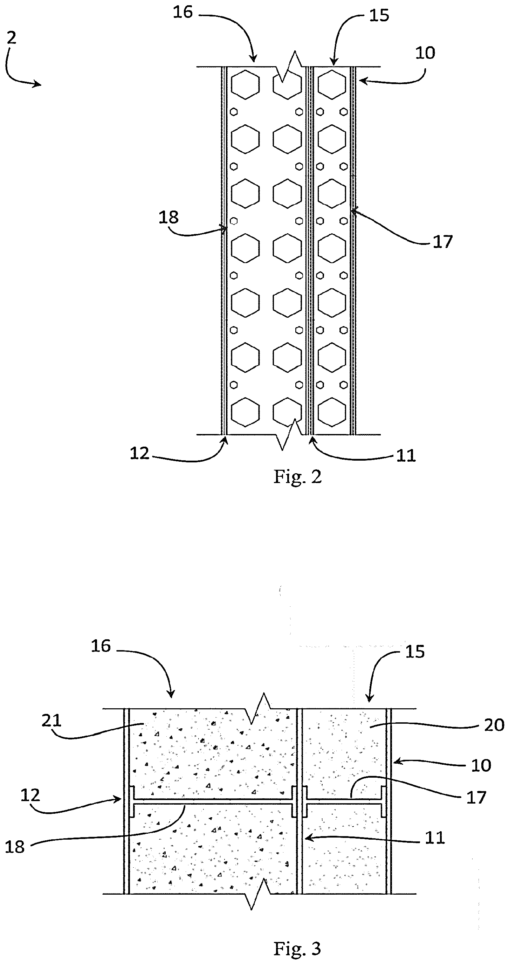

The wall 2 is manufactured initially off-site in a factory with, as shown in Figs 2 to 4, the following steps.

Three panels of concrete fibreboard are mounted with jigs to achieve accurate positioning so that there is:
an outer, first, board 10 (this board is externally-facing);
a middle, second, board 11; and
an inner, third, board 12 which is facing into the internal space.

The boards 10, 11, and 12 define outer, first, space 15 and a wider inner, second, space 16. Each board is in this example a 6mm concrete fireboard, having a strength to form permanent formwork. The depths of the spaces 15 and 16 are set by width of spacers 17 between the boards 10 and 11, and spacers 18 between the boards 11 and 12.

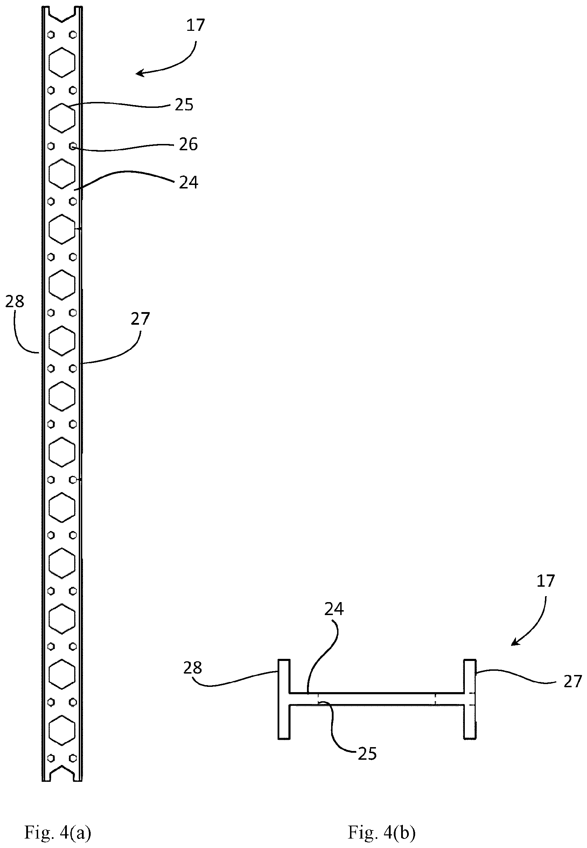

As best shown in Figs. 4(a) and 4(b) the spacers 17 and 18 (spacer 18 has the same configuration as the spacer 17) are extruded or injected moulded plastics elongate members. The material ensures that there is no cold-bridging. They are primarily arranged vertically in terms of the final situation of the wall, but it is sometimes preferred that some are arranged horizontally. Each spacer has a web 24 with large fill apertures 25 and smaller reinforcing bar ("rebar") apertures 26. There is a pair of symmetrical flanges 27 and 28, one on each side for interfacing with the internal surfaces of the boards 10, 11, and 12. The overall shape in end view is therefore I-shaped. The configuration of each aperture 26 is hexagonal, and is sized to allow quick and convenient installation of horizontal rebars, suited for example for forming ring beams and lintels as required. The apertures 25 are also hexagonal, and have a larger size to allow free flow of insulation foam or concrete as applicable. In one example the thickness of the flanges 27 and 28 is 6mm and their width is 40mm.

As shown in Fig. 3, the space between the boards 10 and 11 is filled in the factory by Icynene^{™} closed cell foam insulation 20. The insulation flows after injection to fill the space, having access to all of its volume via the fill openings 25 in the spacers 17. This operation provides, when the insulation has cured, a very highly insulating sandwich in the outer part of the wall cross-section, providing a U value in the range of 0.022 to 0.028.

All joints are taped, jointed, sanded and prepared for paint.

The partially completed wall is then transported to site. The number of wall sections is decided at design stage, but in general it is preferable that the sections extend for the full height of the wall and for a length to suit the transport. Advantageously, there is very little weight due to the nature of the materials and so the wall sections can be easily lifted and mounted without the need for heavy cranage, instead for example a fork lift with chains could be used on-site. The wall sections are of course mounted on a prepared foundation according to the architectural requirements. Floor angle track will be fixed to the floor for inserting the wall panels while gluing and screw-fixing track are mounted to the wall face. The track is permanently fixed to the floor and then the wall panels are inserted therefore, creating a kicker.

As shown in Fig. 3 concrete is poured into the internal, second, cavity space 16. Again, there is flow through the apertures 25 of the spacers 18. The concrete may be of any desired type which provides structural strength and the required level of heat and sound insulation. The spacers 17 and 18, especially those mounted horizontally prevent twisting prior to pouring the concrete, so that the cavity 16 is effective as concrete formwork. The concrete should be poured in layer depth of approximately 400 mm to help reduce and manage the pour pressure during the wall construction. This is repeated until the shutters (cavities 16) are full. Internal and external walls are poured homogeneously, negating the possibility of cold joints. The concrete mix design allows free flow through all the openings and the spacers.

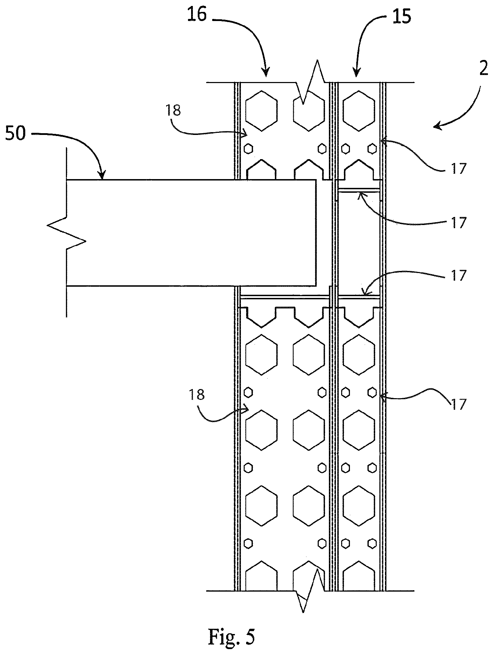

As shown in Fig. 5 joists 50 may be mounted to the wall 2 either before or after pouring of the concrete into the cavity 16. Openings may be cut into the inner board 12 and the end of the joist 50 is inserted. When the concrete is poured it surrounds the end of the joist, providing very comprehensive support for the joist. Brackets or curable seals may be provided to further secure and/or seal the joist to the inner board 12. There are preferably horizontal spacer bars 17 which prevent the shutter from twisting and align the next shutter to be assembled for the next lift, this also assists for the next layer of concrete.

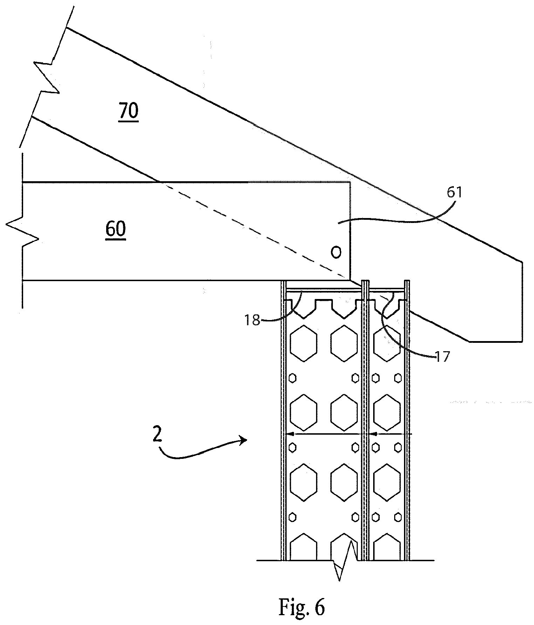

Fig. 6 shows an arrangement in which rafters 70 are also mounted, in this case to joists 60. The inner part of the wall, comprising the sandwich of the boards 11 and 12 and the concrete in-fill 16 provides the structural support for the roof. The joist 60 and the rafter 70 are mechanically jointed by bolts 61 through factor drilled holes. In this case there are two horizontal spacers 17 ad 18 forming a top edge to the wall.

The roof and/or ceiling structure is preferably mounted before the concrete is poured, and so it must be temporarily supported until the concrete has cured. The temporary support is of a conventional type such as Acrow^{™} known for supporting items such as lintels, and the joists can form a temporary platform as part of the temporary structure.

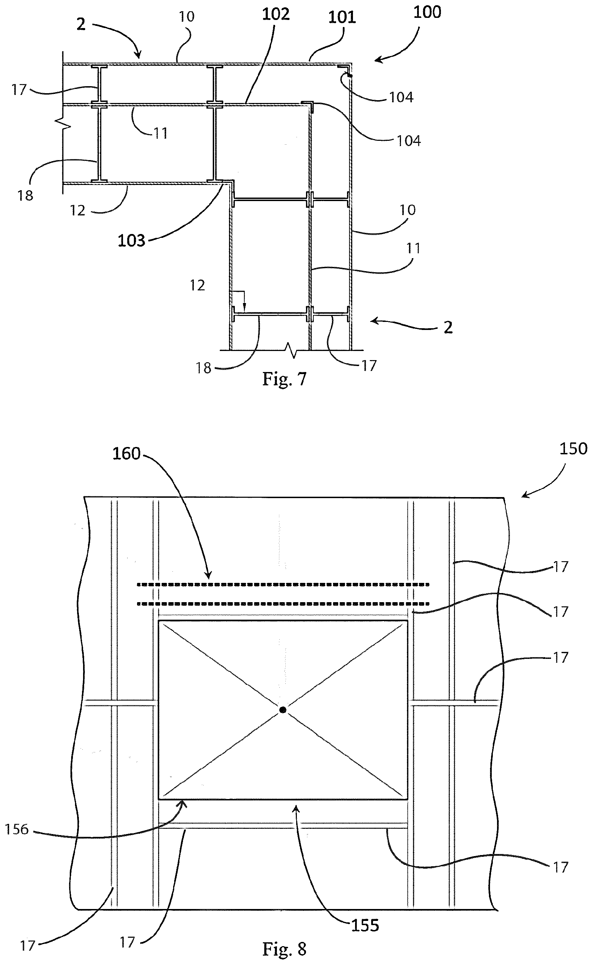

Referring to Fig. 7, corners 100 are completed using corner formwork components, each having an outer board 101, an intermediate board 102, and an inner board 103. The corner components are of styrene butadiene copolymer material (as are the spacers 17 and 18). There are 30mm angle beads 104 bonded by adhesive to bond the prefabricated corners 100.

As shown in Fig. 8 a wall section 150 has a window 155 fitted to the inside of the external leaf, thereby avoiding cold bridging. A structural member 160 of basalt rebar is mounted on a horizontally-mounted spacer bar 17 to provide a lintel. A window sill 156 is made of Icynene fill concrete fire board, and the window 155 rests on the sill 156. The wall at the window has vertical spacers 17 and horizontal spacers 17 arranged according to the design to provide the desired level of stiffness near the window and support for the lintel 160.

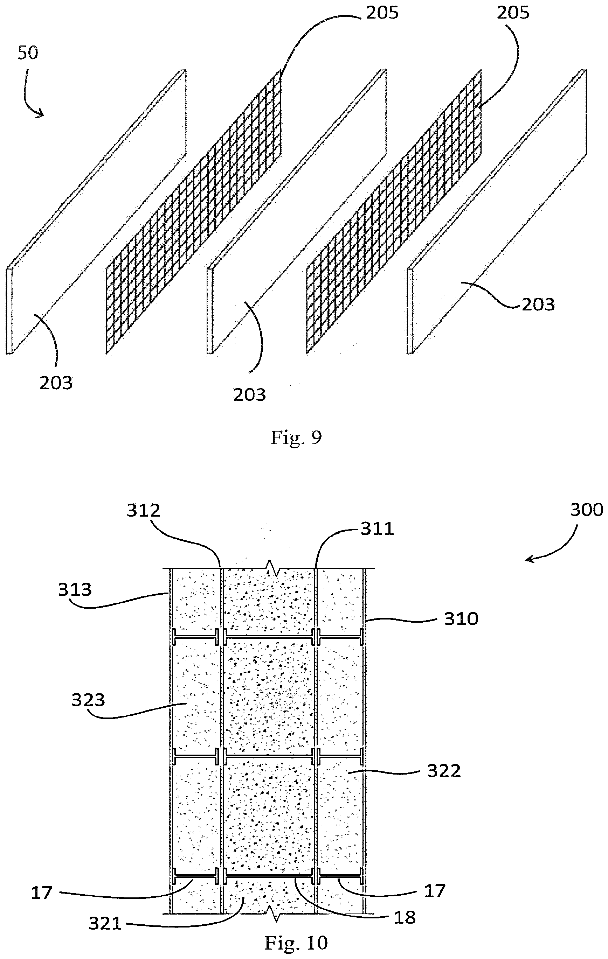

Many of the structural members are not made of wood or metal, rather they are made of a laminated structure joist 50 shown in Fig. 9. The laminated structure comprises several concrete fibre board panels 203 adhered together by a polyurethane adhesive, with a basalt mesh 205 between the board surfaces. The mesh 205 provides a uniform gap of 1mm between each pair of boards 203, and provides anchoring for the adhesive during mechanical pressing. The structural member therefore has a very high strength, does not expand or contract as wood would do, has good insulation properties, and has good fire and water resistance. Also, the panel is resistant to parasites and mould and does not suffer from wet or dry rot. The structural member made in this manner is especially suitable as a joist or a rafter.

In other examples the layers of the laminated structure comprise treated timber which could be used in between the basalt mesh.

Referring to Fig. 10 an alternative wall 300 has:
- an outer, first, board 310,
- a second board 311,
- a third board 312 spaced apart and inwardly of the board 311, and
- an internal, fourth, board 313.

With the four boards there are three spaces:
- an outer space or cavity 322 with thermo-acoustic polyurethane foam,
- an intermediate cavity 321 which may be filled with concrete which, like the cavity 16, provides permanent formwork, and
- an inner space or cavity 323 of thermo-acoustic polyurethane foam.

The spacers 17 and 18 support and locate the boards before filling of the cavities, the cavities 322 and 323 being filled in the factory and the cavity 321 being filled on-site. The cavities 322 and 323 are injected with Thermo-Acoustic Polyurethane, giving a sound absorption of 0.32 and a thermal conductivity of 0.037 W/mK, and the intermediate cavity 321 wall is filled with concrete in order to be load bearing.

The wall sections as described above can also be used for sound proofing the floor by fixing the spacers onto the floor boards and fixing concrete fibre boards on top, and finally inject the void with the thermo-acoustic polyurethane.

### Advantages

It will be appreciated that the wall assembly provides for optimum extent of manufacture in the factory to optimise accuracy and efficiency, while also allowing convenient transport of the components to site as they are in the form primarily of wall sections. The major bulk mass and structural part is provided on site due to the wall and corner sections acting as concrete formwork, and this task is something which can be conveniently done on site. Overall, the wall assembly provides for very short times for construction of buildings of high quality and good thermal insulation properties. These insulation properties can be accurately predicted and are consistent.

The spacers and the foam insulation provide excellent rigidity and accuracy in the wall assembly manufacture. The spacers also allow for versatility in insertion of rebars, and they allow them to be formed in a ring beam if desired, completely surrounding a room or group of rooms.

The wall system can be used for internal boundaries, hallways, meeting rooms, or offices for example.

The wall sections address the cold bridging issues of known construction techniques along with expediting the build because many elements are fitted in the factory.

The injected insulation is affordable and injected in the factory, eliminating time and weather issues.

The "I-beam" spacer (17, 18) arrangement maximises the tensile strength of the permanent shutter structure. The placement of the spacers also allows for vertical and horizontal steel rebar to be held in place should the need arise for structures greater than three storeys.

The concrete which is poured may have a basalt fibre additive to increase the strength of the structure of up to three times that of steel rebar, thus allowing for steel rebar to be eliminated entirely (dependent on design). Because the wall panel assembly provides a permanent concrete formwork the concreted will not be exposed and so if may have any desired additive such as any desired fibrous material to assist strength and/or uniformity and/or fireproofing quality. For example, there may be basalt fibres of dimensions od for example 5 to 100 mm length and a thickness of 1 to 3 mm, and presence of such an additive would not affect surface finish.

The wall allows for correct bevelling of the boards prior to taping and jointing, eliminating need for plastering on site. Therefore, walls can be painted in a matter of hours when the jointing compound is dry. This is further aided by the walls being delivered to site in full-length wall sections as opposed to standard board sized sections, of for example 1.2m x 2.4m size.

The joists and rafters are examples of structural members made in the multi-layer manner illustrated. There may be any desired number of boards to make up the desired thickness and strength requirements, and mesh in-between may be of any desired material including plastics to suit the physical strength requirements.

### Alternatives

The invention is not limited to the embodiments described but may be varied in construction and detail within the scope of the claims. For example, the mesh of the joists may alternatively be of carbon fibres, fibre glass material or alternatively again possibly perforated steel, rather than basalt. Icynene^{™} is only an example of an insulating material. Any suitable insulating material such as a closed cell material may be used. The insulation gives a U value of 0.022 to 0.028 in some embodiments, but this may be different to suit the intended building location.

The in-fill insulation is foam because of the ease of manufacture with foam injection and expansion and extent of contribution to rigidity of the wall sections and ultimately the completed walls.

The depth of the insulation cavity may be chosen in a versatile manner at design stage to suit the physical and insulation requirements.

There may be some horizontally-arranged spacers to suit the requirements for rigidity and foam in-filling, and where there are such spacers, they may form guides for retaining vertically-arranged rebars. In general, the pattern of spacers can be chosen with versatility for easy installation in the factory for optimum anti-twisting and in-fill wall section requirements.

## Claims

1. A wall section for construction of a building, the wall section comprising:
a first board (10),
a spaced-apart and parallel second board (11), and
a spaced-apart and parallel third board (12),
elongate spacers (17, 18) between the first and second boards, and between the second and third boards, said spacers securing the boards in place to define first and second spaces (15, 16),
an insulating in-fill material (20) in said first space, and said second space having a cavity (16) providing a concrete formwork,
**characterised in that**:
at least some of the spacers (17, 18) are I-shaped and comprise elongate lengths of material having a web (24), and flanges (27, 28) interfacing with the boards (10, 11, 12),
at least some of the spacers (18) of said cavity (16) have apertures (25, 26) in the web for flow of concrete filling the cavity on site and integration of the concrete in the cavity,
at least some of the spacers (17) of said first space (15) have apertures (25, 26) in the web for flow of said insulation material during injection and for integration of in-fill material across said spacers,
and
the in-fill insulation material (20) comprises a cured foam insulating material.

2. A wall section as claimed in any preceding claim, wherein at least some of the spacers in the cavity include apertures (25, 26) through which reinforcing bars can extend.

3. A wall section as claimed in any preceding claim, wherein the wall section comprises a plurality of said spacers (17, 18) extending vertically and a plurality of said spacers (17, 18) extending horizontally in which at least some of the horizonal spacers form a top edge of the wall section.

4. A wall section as claimed in any preceding claim, wherein the wall section further comprises a fourth board (313) defining a third space (323) with the third board, said third space (323) having an in-fill material.

5. A wall section as claimed in claim 4, wherein the third space (322, 323) is filled with a cured insulating material.

6. A wall section as claimed in claim 5, wherein the cured material includes polyurethane.

7. A wall section as claimed in any preceding claim, wherein at least some of the boards (10, 11, 12) are of concrete fibreboard.

8. A wall assembly comprising a wall section of any preceding claim, and a corner component (100) having panels (101, 102, 103) arranged to form continuations of said wall section boards.

9. A wall assembly as claimed in claim 8, wherein the corner component comprises vertically-arranged spacers (17, 18).

10. A wall assembly as claimed in claims 8or 9, wherein at least some of the wall sections are fixed to the floor foundation by a floor-mounted track.

11. A wall assembly as claimed in any of claims 8, to 10, further comprising a ring beam formed by reinforcing bar extending through apertures (25, 26) of said spacers in the cavity (16).

12. A method of erecting a building comprising the steps of manufacturing a plurality of wall sections (2) of any of claims 1 to 7, mounting the wall sections on a foundation, joining at least some of said sections, pouring concrete (21) into at least some of the cavities (16), and mounting ceiling and/or floor joists (50, 60) to the wall sections.

13. A method as claimed in claim 12, wherein the joists (60) are mounted to the wall sections while being supported by a temporary support, the concrete (21) is poured, and the temporary support is removed after the concrete has cured.

14. A method as claimed in claim 13, wherein the joists comprise a plurality of panels (203) joined together in a sandwich by an adhesive and with a mesh (205) embedded in the adhesive between at least two of the panels.

15. A method as claimed in claim 14, wherein the mesh comprises a non-metallic material, and wherein the mesh (205) comprises basalt, and wherein the spacing between juxtaposed panels (203) is substantially equal to the depth of the mesh.

## Patentansprüche

1. Wandabschnitt zum Bau eines Gebäudes, wobei der Wandabschnitt Folgendes umfasst:
eine erste Platte (10),
eine beabstandete und parallele zweite Platte (11) und
eine beabstandete und parallele dritte Platte (12),
längliche Abstandshalter (17, 18) zwischen der ersten und der zweiten Platte und zwischen der zweiten und der dritten Platte, wobei die Abstandshalter die Platten an ihrer Position sichern, um einen ersten und einen zweiten Zwischenraum (15, 16) zu definieren,
ein isolierendes Füllmaterial (20) in dem ersten Zwischenraum und wobei der zweite Zwischenraum einen Hohlraum (16) aufweist, der eine Betonschalung bereitstellt,
**dadurch gekennzeichnet, dass**:
mindestens einige der Abstandshalter (17, 18) doppel-T-förmig sind und gestreckte Längen aus Material mit einem Steg (24) und Flanschen (27, 28) umfassen, die sich mit den Platten (10, 11, 12) koppeln,
mindestens einige der Abstandshalter (18) des Hohlraums (16) Öffnungen (25, 26) in dem Steg für das Fließen von Betons, der den Hohlraum vor Ort füllt, und das Einbinden des Betons in den Hohlraum aufweisen,
mindestens einige der Abstandshalter (17) des ersten Zwischenraumes (15) Öffnungen (25, 26) in dem Steg für das Fließen des Isolationsmaterials während des Einfüllens und zum Einbinden des Füllmaterials über die Abstandshalter aufweisen,
und
das Füllisolationsmaterial (20) ein Isolationsmaterial aus gehärtetem Schaum umfasst.

2. Wandabschnitt nach einem vorhergehenden Anspruch, wobei mindestens einige der Abstandshalter in dem Hohlraum Öffnungen (25, 26) beinhalten, durch die sich Verstärkungsstäbe erstrecken können.

3. Wandabschnitt nach einem vorhergehenden Anspruch, wobei der Wandabschnitt mehrere Abstandshalter (17, 18) umfasst, die sich vertikal erstrecken, und mehrere Abstandshalter (17, 18), die sich horizontal erstrecken, wobei mindestens einige der horizontalen Abstandshalter eine obere Kante des Wandabschnitts bilden.

4. Wandabschnitt nach einem vorhergehenden Anspruch, wobei der Wandabschnitt ferner eine vierte Platte (313) umfasst, die einen dritten Zwischenraum (323) mit der dritten Platte definiert, wobei der dritte Zwischenraum (323) ein Füllmaterial aufweist.

5. Wandabschnitt nach Anspruch 4, wobei der dritte Zwischenraum (322, 323) mit einem gehärteten Isolationsmaterial gefüllt ist.

6. Wandabschnitt nach Anspruch 5, wobei das gehärtete Material Polyurethan beinhaltet.

7. Wandabschnitt nach einem vorhergehenden Anspruch, wobei mindestens einige der Platten (10, 11, 12) aus Faserbetonplatte bestehen.

8. Wandbaugruppe, umfassend einen Wandabschnitt nach einem vorhergehenden Anspruch und eine Eckkomponente (100) mit Paneelen (101, 102, 103), die dafür angeordnet sind, Fortsetzungen der Wandabschnittplatten zu bilden.

9. Wandbaugruppe nach Anspruch 8, wobei die Eckkomponente vertikal angeordnete Abstandshalter (17, 18) umfasst.

10. Wandbaugruppe nach Anspruch 8 oder 9, wobei mindestens einige der Wandabschnitte durch eine am Boden montierte Schiene an der Bodengründung fixiert sind.

11. Wandabschnitt nach einem der Ansprüche 8 bis 10, ferner umfassend einen Ringbalken, der durch einen Verstärkungsstab gebildet ist, der sich durch Öffnungen (25, 26) der Abstandshalter in dem Hohlraum (16) erstreckt.

12. Verfahren zum Errichten eines Gebäudes, die Schritte des Herstellens mehrerer Wandabschnitte (2) nach einem der Ansprüche 1 bis 7, des Montierens der Wandabschnitte an eine Gründung, des Verbindens mindestens einiger der Abschnitte, des Gießens von Beton (21) in mindestens einige der Hohlräume (16) und des Montierens von Decken- und/oder Bodenbalken (50, 60) an die Wandabschnitte umfassend.

13. Verfahren nach Anspruch 12, wobei die Balken (60) an die Wandabschnitte montiert werden, während sie von einer temporären Abstützung abgestützt werden, der Beton (21) gegossen wird und die temporäre Abstützung entfernt wird, nachdem der Beton ausgehärtet ist.

14. Verfahren nach Anspruch 13, wobei die Balken mehrere Paneele (203) umfassen, die durch einen Klebstoff und mit einem Gitter (205), das zwischen mindestens zwei der Paneele in den Klebstoff eingebettet ist, zu einer Schichtanordnung miteinander verbunden sind.

15. Verfahren nach Anspruch 14, wobei das Gitter ein nicht-metallisches Material umfasst und wobei das Gitter (205) Basalt umfasst und wobei der Zwischenraum zwischen gegenüberliegenden Paneelen (203) im Wesentlichen gleich der Tiefe des Gitters ist.

## Revendications

1. Section de paroi pour la construction d'un bâtiment, la section de paroi comprenant :
une première plaque (10),
une deuxième plaque (11) espacée et parallèle, et
une troisième plaque (12) espacée et parallèle,
des cales d'espacement allongées (17, 18) entre les première et deuxième plaques, et entre les deuxième et troisième plaques, lesdites cales d'espacement assujettissant les plaques en place pour définir des premier et deuxième espaces (15, 16),
un matériau de remplissage isolant (20) dans ledit premier espace, et ledit deuxième espace ayant une cavité (16) mettant en oeuvre un coffrage à béton,
**caractérisée en ce que** :
au moins certaines des cales d'espacement (17, 18) sont en forme de I et comprennent des longueurs allongées de matériau ayant une âme (24) et des brides (27, 28) effectuant l'interface avec les plaques (10, 11, 12),
au moins certaines des cales d'espacement (18) de ladite cavité (16) ont des ouvertures (25, 26) dans l'âme à des fins d'écoulement du béton en vue du remplissage de la cavité sur place et de l'intégration du béton dans la cavité,
au moins certaines des cales d'espacement (17) dudit premier espace (15) ont des ouvertures (25, 26) dans l'âme à des fins d'écoulement dudit matériau isolant au cours de l'injection et à des fins d'intégration du matériau de remplissage à travers lesdites cales d'espacement,
et
le matériau de remplissage isolant (20) comporte un matériau isolant en mousse durcie.

2. Section de paroi selon l'une quelconque des revendications précédentes, dans laquelle au moins certaines des cales d'espacement dans la cavité comprennent des ouvertures (25, 26) à travers lesquelles des barres d'armature peuvent s'étendre.

3. Section de paroi selon l'une quelconque des revendications précédentes, dans laquelle la section de paroi comporte une pluralité desdites cales d'espacement (17, 18) s'étendant à la verticale et une pluralité desdites cales d'espacement (17, 18) s'étendant à l'horizontale, au moins certaines des cales d'espacement horizontales formant un bord supérieur de la section de paroi.

4. Section de paroi selon l'une quelconque des revendications précédentes, dans laquelle la section de paroi comporte par ailleurs une quatrième plaque (313) définissant un troisième espace (323) avec la troisième plaque, ledit troisième espace (323) ayant un matériau de remplissage.

5. Section de paroi selon la revendication 4, dans laquelle le troisième espace (322, 323) est rempli d'un matériau isolant durci.

6. Section de paroi selon la revendication 5, dans laquelle le matériau durci comprend du polyuréthane.

7. Section de paroi selon l'une quelconque des revendications précédentes, dans laquelle au moins certaines des plaques (10, 11, 12) sont des plaques de fibres de béton.

8. Ensemble formant paroi comportant une section de paroi selon l'une quelconque des revendications précédentes, et un composant d'angle (100) ayant des panneaux (101, 102, 103) agencés pour former des prolongements desdits plaques de section de paroi.

9. Ensemble de paroi selon la revendication 8, dans lequel le composant d'angle comporte des cales d'espacement agencées à la verticale (17, 18).

10. Ensemble de paroi selon la revendication 8 ou la revendication 9, dans lequel au moins certaines des sections de paroi sont fixées aux fondations de plancher au moyen d'un rail monté sur le plancher.

11. Ensemble de paroi selon l'une quelconque des revendications 8 à 10, comportant par ailleurs une poutre annulaire formée par une barre d'armature s'étendant au travers des ouvertures (25, 26) desdites cales d'espacement dans la cavité (16).

12. Procédé d'érection d'un bâtiment comprenant les étapes consistant à fabriquer une pluralité de sections de paroi (2) selon l'une quelconque des revendications 1 à 7, à monter les sections de paroi sur des fondations, à relier au moins certaines desdites sections, à couler du béton (21) dans au moins certaines des cavités (16), et à monter des solives de plafond et/ou de plancher (50, 60) sur les sections de paroi.

13. Procédé selon la revendication 12, dans lequel les solives (60) sont montées sur les sections de paroi tout en étant supportées par un support temporaire, le béton (21) est coulé, et le support temporaire est retiré une fois le béton durci.

14. Procédé selon la revendication 13, dans lequel les solives comportent une pluralité de panneaux (203) reliés ensemble en sandwich par un adhésif et avec un treillis (205) encastré dans l'adhésif entre au moins deux des panneaux.

15. Procédé selon la revendication 14, dans lequel le treillis comporte un matériau non métallique, et dans lequel le treillis (205) comporte du basalte, et dans lequel l'espacement entre des panneaux juxtaposés (203) est sensiblement égal à la profondeur du treillis.
